# DEMANDE DE BREVET EUROPEEN

(11) **EP 2 924 671 A1**
(43) Date de publication de la demande: **30.09.2015**
(21) Numéro de dépôt: 15160631.6
(22) Date de dépôt: 24.03.2015
(51) Int. Cl.: G08G 1/015, G08G 1/017

(54) **SYSTÈME DE CLASSIFICATION AUTOMATIQUE DE VÉHICULES AUTOMOBILES**

(30) Priorité: 24.03.2014 FR 1452453
(71) Demandeur: Survision, 92500 Rueil Malmaison (FR)
(72) Inventeur: Lameyre, Bruno, 49610 SOULAINES SUR AUBANCE (FR); Jouannais, Jacques, 75006 Paris (FR)
(74) Mandataire: Blot, Philippe Robert Emile

(57) **Abrégé**

Ce système de classification automatique comprend une unité de traitement de données (20) programmée pour classifier un véhicule présent sur des images capturées par une caméra (6), par traitement des images capturées, les images capturées étant des images matricielles d'intensité et la caméra (6) étant disposée pour capturer des images des véhicules en vue plongeante et de trois quart, de préférence de trois quart face.

## Description

La présente invention concerne le domaine de la classification automatique des véhicules automobiles, notamment en vue de la détermination du montant d'un péage à acquitter.

L'accès des véhicules automobiles à certaines zones est parfois conditionné au paiement d'un péage, dont le montant varie souvent en fonction de la classe des véhicules répartis en différentes classes en fonction de critères prédéterminés (longueur, nombre d'essieux, présence d'un attelage...).

Il est possible de prévoir un système de classification automatique des véhicules pour déterminer le montant du péage à acquitter par chaque véhicule.

FR 2 903 519 A1 divulgue un système de classification automatique de véhicules automobiles comprenant un dispositif laser combiné à une caméra thermique pour déterminer la classe des véhicules. Le dispositif laser permet de mesurer la longueur, la largeur et la hauteur du véhicule. La caméra thermique permet d'estimer le nombre d'essieux roulant du fait de la chaleur qu'ils rayonnent.

EP 2 306 426 A1 divulgue un système de classification automatique de véhicules automobiles comprenant des caméras temps de vol (« Time-Of-Flight » en anglais) capable de capturer une image tridimensionnelle de la scène pour déterminer les caractéristiques physiques du véhicule et sa classe.

Un des buts de la présente invention est de proposer un système de classification automatique de véhicule qui puisse être mise en oeuvre de manière simple et économique, tout en étant fiable.

A cet effet, l'invention propose un système de classification automatique de véhicules automobiles roulant sur une route, comprenant une unité de traitement de données programmée pour classifier un véhicule présent sur des images capturées par une caméra, par traitement des images capturées, les images capturées étant des images matricielles d'intensité et la caméra étant disposée pour capturer des images des véhicules en vue plongeante et de trois quart, de préférence de trois quart face.

Le système de classification peut comprendre en option une ou plusieurs des caractéristiques suivantes :
- l'unité de traitement de données est programmée pour calculer une image redressée à partir d'une image capturée, de manière à rétablir sur l'image redressée le parallélisme entre des éléments parallèles de la scène réelle et la perpendicularité entre des éléments perpendiculaires de la scène réelle ;
- le calcul de l'image redressée en réalisé en appliquant une matrice de transformation prédéterminée à l'image capturée ;
- l'unité de traitement de données est programmée pour calculer une image reconstituée sur laquelle un véhicule est visible sur toute sa longueur, à partir d'une séquence d'images sur lesquelles au moins un tronçon du véhicule apparaît ;
- l'unité de traitement de données est programmée pour identifier des points caractéristiques du véhicule apparaissant sur plusieurs images de la séquence d'images et combiner les images de la séquence d'images en fonction des points caractéristiques identifiés pour former l'image reconstituée ;
- l'unité de traitement de données est programmée pour calculer la longueur et/ou la hauteur du véhicule à partir de l'image reconstituée ;
- l'unité de traitement de données est programmée pour compter le nombre d'essieux du véhicule en comptant le nombre de roues apparaissant sur une face latérale du véhicule visible à partir de l'image reconstituée ;
- l'unité de traitement de données est programmée pour détecter une roue au moyen d'un algorithme d'identification d'ellipse ;
- l'unité de traitement de données est programmée pour compter le nombre d'essieux en fonction de configurations d'essieux prédéterminées ;
- l'unité de traitement de données est programmée pour détecter l'entrée d'un nouveau véhicule dans le champ de la caméra par détection d'une plaque d'immatriculation sur les images capturées ;
- l'unité de traitement de données est programmée pour détecter la séparation entre un véhicule et le véhicule suivant en fonction des caractéristiques photométriques de la route et la signalisation.

L'invention concerne également un système de classification automatique de véhicules comprenant une caméra fournissant des images matricielles d'intensité, la caméra étant disposée pour capturer des images des véhicules roulant sur la route en vue plongeante et de trois quart, de préférence de trois quart face, et une unité de traitement de données programmée pour la classification de véhicule par traitement des images capturées par la caméra.

L'invention concerne également un procédé de classification automatique de véhicules automobiles roulant sur une route, comprenant la classification d'un véhicule présent sur des images capturées par une caméra, par traitement des images capturées par une unité de traitement de données, les images capturées étant des images matricielles d'intensité et la caméra étant disposée pour capturer des images des véhicules en vue plongeante et de trois quart, de préférence de trois quart face.

L'invention concerne encore un produit programme d'ordinateur programmé pour mettre en oeuvre le procédé ci-dessus, lorsqu'il est exécuté par une unité de traitement de données.

L'invention et ses avantages seront mieux compris à la lecture de la description qui va suivre, donnée uniquement à titre d'exemple et faite en référence aux dessins annexés, sur lesquels :
- les Figure 1 et 2 sont des vues schématiques de côté et de dessus d'un système de classification automatique ;
- les Figures 3 et 4 sont des illustrations d'images brutes capturées par une caméra du système de classification automatique, sur lesquelles apparaît un véhicule;
- les Figures 5 et 6 sont des illustrations d'images redressées obtenues par application d'une transformation géométrique aux images brutes des Figures 3 et 4;
- la Figure 7 est une illustration d'une image reconstituée obtenue par assemblage d'images redressées, incluant les images redressées des Figures 5 et 6;

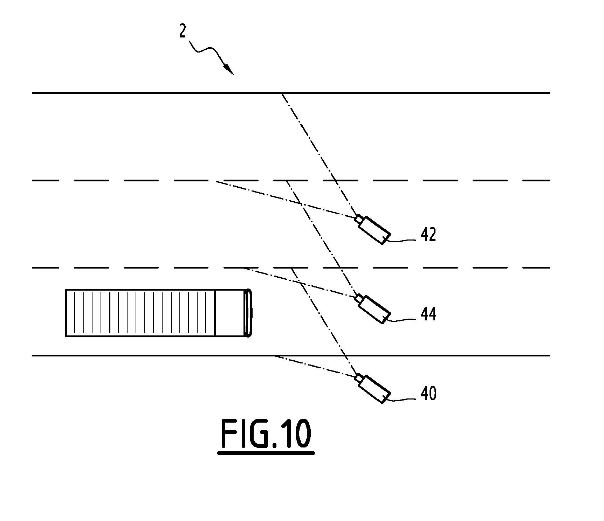

- les Figures 8, 9 et 10 sont des vue schématiques de dessus de système de classification automatique pour des routes à plusieurs voies.

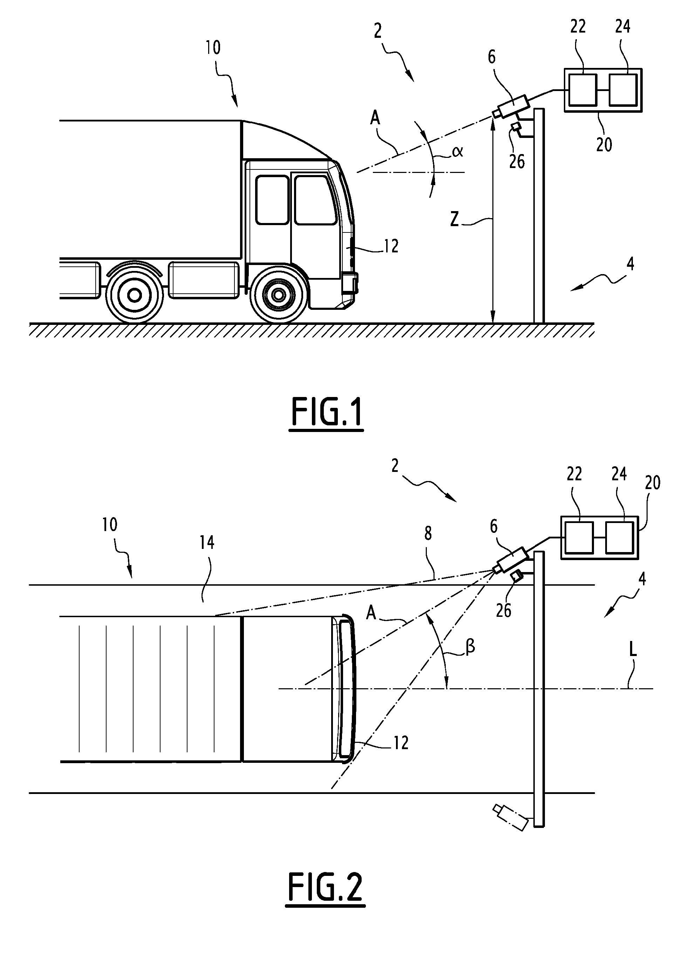

Le système de classification 2 des Figures 1 et 2 est disposé pour classifier de manière automatique les véhicules circulant sur une voie de circulation.

Le système de classification 2 comprend une caméra 6 disposée sur un support prévu ici sous la forme d'un portique enjambant la voie de circulation. En variante, dans le cas ou le nombre de voie à analyser ne dépasse pas deux, un simple poteau de maintien de la caméra est suffisant.

La caméra 6 est une caméra vidéo numérique fournissant des images bidimensionnelles (2D) de la scène présente dans le champ de vision 8 de la caméra 6.

La caméra 6 possède un capteur photosensible numérique, par exemple un capteur CCD ou CMOS.

La caméra 6 fournit des images matricielles d'intensité lumineuse, dans la bande spectrale des fréquences visibles. La caméra 6 fournit par exemple les images d'intensité lumineuse dans une bande spectrale comprise entre 400 nanomètre et 1 micromètre. Chaque image est composée d'une matrice de pixels, chaque pixel étant associé à une valeur d'intensité lumineuse.

La caméra 6 est par exemple une caméra en noir et blanc fournissant des images dont chaque pixel est associé à une seule valeur d'intensité, correspondant à un niveau de gris. En variante, la caméra 6 est une caméra couleur, chaque pixel étant associé à plusieurs valeurs d'intensité, chacune pour une couleur respective.

La caméra 6 est disposée de façon à prendre les véhicules 10 circulant sur la voie de circulation en vue plongeante et de trois quart face. La caméra 6 est orientée de façon que la face avant 12 puis une face latérale 14 d'un véhicule 10 circulant sur la voie de circulation 4 apparaissent successivement sur les images prises par la caméra 6.

La caméra 6 est située en hauteur par rapport aux véhicules. L'axe de prise de vue A de la caméra 6 est dirigé obliquement vers le bas. L'axe de prise de vue A de la caméra fait un angle non nul avec le plan horizontal et avec la direction verticale. L'angle α entre l'axe de prise de vue A et le plan horizontal est compris entre 20 et 35 degrés (Figure 1). La caméra est disposée une hauteur Z comprise entre 5 mètres et 7,5 mètres par rapport au niveau de la voie de circulation.

La caméra 6 est décalée latéralement par rapport à l'axe central L de la voie de circulation A. L'axe de prise de vue A de la caméra est oblique par rapport à l'axe central L de la voie de circulation. En projection dans un plan horizontal (Figure 2), l'axe de prise de vue A de la caméra 6 fait un angle ß compris entre 10 et 25 degrés avec l'axe central L de la voie de circulation 4.

Le système de classification 2 comprend une unité de traitement de données 20 configurée pour classifier automatiquement les véhicules apparaissant sur les images prises par la caméra 6, exclusivement par traitement numérique des images prises par la caméra 6. En option, cette unité de traitement peut être intégrée dans la caméra 6.

L'unité de traitement de données 20 comprend un processeur 22, une mémoire 24 et une application logicielle stockée dans la mémoire 24 et exécutable par le processeur 22. L'application logicielle comprend des instructions logicielles permettant de déterminer la classe de véhicules apparaissant sur les images fournies par la caméra 6 exclusivement par traitement numérique des images prises par la caméra 6.

L'application logicielle comprend un ou plusieurs algorithmes de traitement d'images permettant de déterminer la classe de véhicules apparaissant sur les images fournies par la caméra 6.

En option, le système de classification 2 comprend un projecteur lumineux 26 pour illuminer la scène dans le champ de vision 8 de la caméra 6. Le projecteur lumineux 26 émet par exemple une lumière dans le domaine non visible, en particulier une lumière infrarouge, pour ne pas éblouir les conducteurs. Le projecteur lumineux 26 émet par exemple une lumière pulsée, en synchronisme avec la prise d'image par la caméra 6, pour limiter la lumière émise vers les véhicules. La caméra 6 est sensible à la lumière du projecteur lumineux 26.

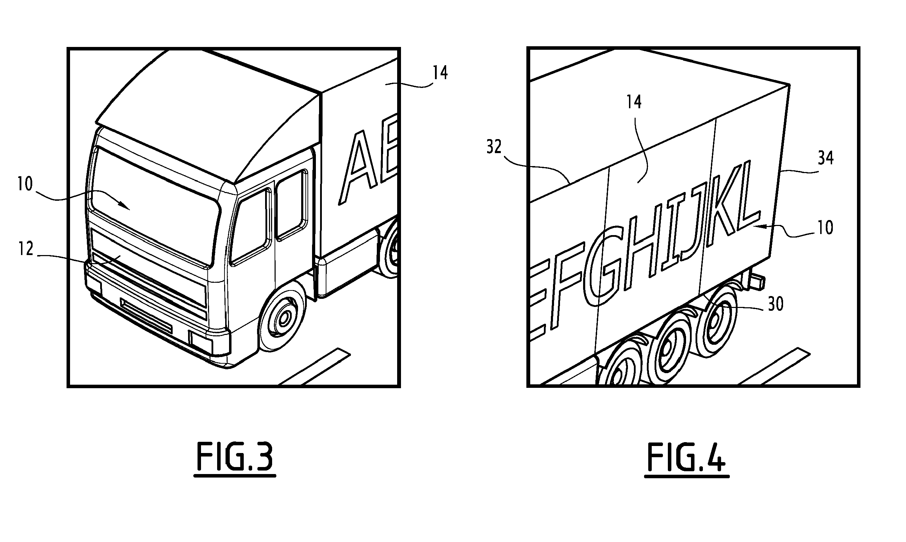

Les Figures 3 et 4 illustrent des images brutes prises par la caméra l'une après l'autre et sur lesquelles apparaît un même véhicule 10. Sur la première image brute apparaissent la face avant 12 et une fraction de la face latérale 14 du véhicule 10. Sur la deuxième image brute apparaît une fraction de la face latérale 14 du véhicule 10.

L'unité de traitement de données 20 est programmée pour mettre en oeuvre une première étape de redressement des images brutes fournies par la caméra 6. Du fait de l'orientation de la caméra 6 par rapport à la voie de circulation 4, un effet de perspective est présent sur les images. Il en résulte que les formes géométriques des objets présents sur l'image sont déformées par rapport à la réalité.

L'étape de redressement consiste à appliquer une transformation géométrique à chaque image brute pour obtenir une image redressée sur laquelle sont rétablis le parallélisme entre des éléments parallèles de la scène et la perpendicularité entre des éléments perpendiculaires de la scène, en particulier le parallélisme entre les éléments parallèles de la face latérale 14 d'un véhicule 10 et la perpendicularité entre les éléments perpendiculaires de la face latérale 14 d'un véhicule 10.

La même transformation géométrique prédéterminée est appliquée à toutes les images prises par la caméra 6. La transformation géométrique est déterminée a priori, dans une phase de calibrage du système de classification 2.

L'étape de redressement comprend l'application d'une matrice de transformation à l'image brute, fournissant comme résultat l'image redressée. La matrice de transformation est une matrice prédéterminée. La matrice de transformation est déterminée dans une phase de calibrage du système de classification 2.

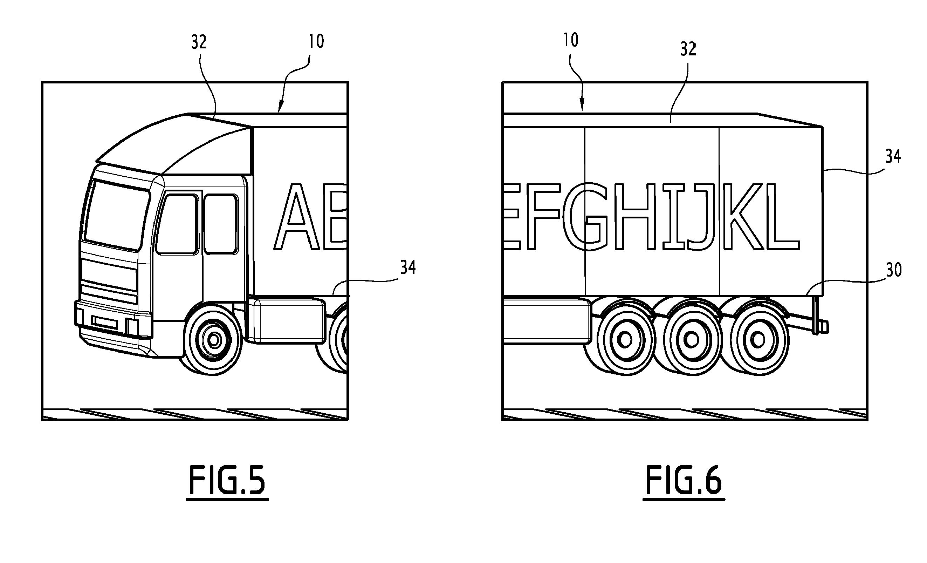

Les Figures 5 et 6 illustrent les images redressées correspondant aux images brutes des Figures 3 et 4 respectivement.

Comme visible sur les Figures 5 et 6, la transformation utilisée pour redresser les images issues de 6 est une homographie, c'est-à-dire une projection de l'espace projectif sur lui-même. Cette transformation est donnée par une matrice de transformation 3x3 contenant huit degrés de liberté.

Sur l'image de la Figure 6, le parallélisme, par exemple entre le bord inférieur 30 et le bord supérieur 32 de la remorque du véhicule 10, est rétabli, et la perpendicularité, par exemple le bord supérieur 32 et le bord arrière 34 de la remorque du véhicule 10, est rétablie.

L'unité de traitement de données 20 est programmée pour mettre en oeuvre une deuxième étape de reconstitution dans laquelle des images d'une séquence d'images sur chacune desquelles apparaît au moins une fraction d'un véhicule 10 sont assemblées pour obtenir une image reconstituée sur laquelle apparaît le véhicule sur toute sa longueur. L'étape de reconstitution est ici réalisée à partir d'une séquence d'images redressées.

L'unité de traitement de données 20 est programmée pour détecter des zones d'intérêt sur les images de la séquence d'images. L'unité de traitement de donnée 24 est programmée pour mettre en oeuvre un algorithme de détection de points d'intérêt.

L'algorithme de détection de points d'intérêt est par exemple un algorithme de détection de coins qui détecte les zones de l'image où les gradients d'intensité varient rapidement dans plusieurs directions simultanément.

L'unité de traitement de données 24 est programmée pour associer, à chacun des points d'intérêts, un vecteur caractéristique du point de façon à pourvoir déterminer mathématiquement la distance séparant deux points. L'algorithme de caractérisation de point d'intérêt est par exemple les vingt premiers harmoniques d'une transformée en cosinus discrète (ou DCT pour Direct Cosinus Transform) effectuée sur une zone de l'image entourant le point d'intérêt.

L'unité de traitement de données 24 est programmée pour former une image reconstituée en assemblant les images de la séquence d'images. Cet assemblage est effectué en appariant les points d'intérêts détectés dans deux images successives qui possèdent des caractérisations identiques.

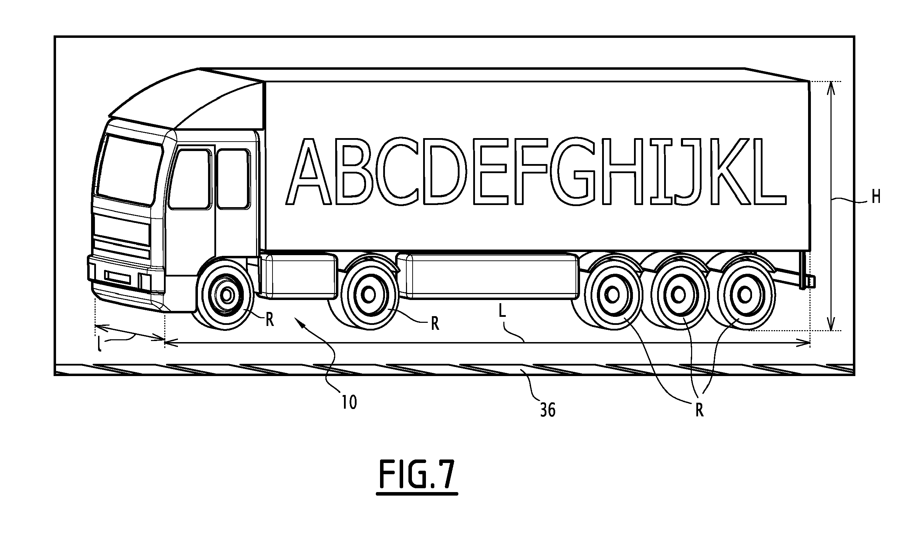

La Figure 7 illustre une image reconstituée du véhicule obtenue par assemblage de plusieurs images d'une séquence d'images redressées. Des exemples de points d'intérêt utilisés comme points de référence pour assembler les images sont entourés sur la Figure 7.

L'unité de traitement de données 20 est programmée pour mettre en oeuvre une troisième étape de mesures de caractéristiques géométriques du véhicule à partir d'images prises par la caméra. L'étape de mesure est mise en oeuvre sur l'image reconstituée de la Figure 7.

L'étape de mesure comprend la mesure de la longueur L du véhicule 10, de la largeur l du véhicule 10 et/ou de la hauteur H du véhicule 10. La correspondance entre les dimensions réelles du véhicule et les dimensions du véhicule sur une image reconstituée est par exemple déterminée dans une étape de calibration du système de classification. Les dimensions du véhicule sur l'image reconstituée sont par exemple déterminées par un nombre de pixels.

Les contours du véhicule sur l'image reconstituée sont par exemple déterminés à l'aide d'un algorithme de détection de contour.

L'étape de mesure comprend la mesure de la position transversale du véhicule sur la voie de circulation. La position transversale est déterminée par exemple par référence à la signalisation de la voie de circulation, en particulier le marquage au sol de la voie de circulation. La position transversale est ici déterminée par rapport à une bande latérale 36 de marquage au sol. La correspondance entre les dimensions réelles du véhicule et les dimensions de l'image du véhicule sur une image reconstituée, en fonction de la position latérale du véhicule, est par exemple déterminée dans une étape de calibration du système de classification.

L'étape de mesure comprend le comptage du nombre d'essieux du véhicule. Cette mesure est réalisée par détection des roues R sur la face latérale 14 du véhicule 10 visible sur les images. La détection des roues R est effectuée par détection d'ellipses sur les images prises par la caméra, ici sur l'image reconstituée (Figure 7) obtenue à partir des images prises par la caméra. L'unité de traitement de données 24 est programmée pour mettre en oeuvre un algorithme de reconnaissance d'ellipses.

Par exemple, la détection d'ellipse peut être effectuée en utilisant une transformée de Hough généralisée appliquée aux ellipses ou bien en détectant une des configurations caractéristiques de la répartition de la direction des gradients.

Il est possible que l'unité de traitement de données 20 détecte des faux positifs, c'est-à-dire qu'elle détecte une ellipse dans l'image alors qu'une telle ellipse ne correspond pas à une roue du véhicule.

En option, le comptage du nombre d'essieux comprend la comparaison de la position des ellipses sur l'image avec des configurations de références préenregistrées correspondant chacune à une configuration d'essieux possible.

Cette comparaison permet d'éliminer des faux positifs dans le comptage du nombre d'essieux d'un véhicule, en détectant la correspondance d'un groupe d'ellipse avec une configuration référencée et en écartant une ellipse surnuméraire, considérée comme faux positif.

L'unité de traitement de données 20 est programmée pour déterminer la classe d'un véhicule apparaissant sur les images prises par la caméra 6 en fonction de mesures (mesures de caractéristiques géométriques et/ou un comptage du nombre d'essieux) réalisés par l'unité de traitement de données 20.

L'unité de mesure est avantageusement programmée pour déterminer la classe par comparaison de mesures (mesures de caractéristiques géométriques et/ou comptage du nombre d'essieux) à un ensemble de critères prédéterminés.

L'unité de traitement de données 20 est programmée pour détecter chaque véhicule entrant dans le champ de vision 8 de la caméra 6. La détection de chaque véhicule est réalisée par détection de mouvements possédant des trajectoires cohérentes dans le champ de vision de la caméra 6 et/ou par exemple par détection de contour. La distinction entre deux véhicules se suivant l'un derrière l'autre peut être difficile si les deux véhicules sont trop proches.

L'unité de traitement de données 20 est programmée pour détecter la séparation entre deux véhicules proches. De jour, cette détection est basée sur la présence d'éléments symétriques tels que la calandre et/ou par détection d'une plaque minéralogique, avec éventuellement une lecture de la plaque minéralogique. De nuit, la détection de séparation entre deux véhicules proches est basée sur la détection de la présence des phares et sur la détection d'une plaque minéralogique, celle-ci étant visible de jour, comme de nuit, car elle est réfléchissante à la lumière infrarouge émis par le projecteur 26. La détection de plaque d'immatriculation est effectuée, par exemple, en détectant la signature caractéristique des gradients de l'image autour de la plaque. La lecture la plaque d'immatriculation est réalisée, par exemple, au moyen d'un algorithme de reconnaissance optique de caractères. La nuit, la détection des phares est réalisée, par exemple, au moyen d'un algorithme de détection de la variation importante de la luminance dans les images issues de la caméra 6.

En variante ou en option, la détection de la présence de deux véhicules proches est réalisée à partir d'éléments de signalisation de référence de la voie de circulation, tels que le marquage au sol ou des barrières de sécurité. Ces éléments de signalisation, attenants à la voie de circulation, apparaissent comme des éléments fixes sur les séquences d'images prises par la caméra 6.

Par exemple, la détection sur des images d'une séquence d'images de différents tronçons d'un élément de signalisation visibles entre deux zones où l'élément de signalisation est masqué par le véhicule est le signe que les deux zones correspondent à deux véhicules proches, le tronçon visible sur chaque image correspondant à l'intervalle entre ces deux véhicules.

Les éléments de signalisation de référence sont détectés sur les images par exemple par appariement de masque.

Les éléments de signalisation peuvent néanmoins apparaître différemment sur les images en fonction des conditions ambiantes (luminosité, jour, nuit, soleil, pluie, position du soleil...) et du réglage de la caméra 6, qui peut être dynamique.

Une détection des éléments de signalisation (par ex. par appariement de masques) fonctionnant pour certaines conditions ambiantes, peut ne pas fonctionner convenablement pour d'autres conditions ambiantes.

De préférence, l'unité de traitement de données 20 est programmée pour l'implémentation d'un apprentissage automatique et continu des caractéristiques photométriques de la voie de circulation et/ou des éléments de signalisation.

L'unité de traitement de données 20 est ainsi programmée pour mettre en oeuvre la détection de la séparation de véhicules se suivant, notamment à partir de la voie de circulation et/ou des éléments de signalisation, en fonction des caractéristiques photométriques de la voie de circulation et des éléments de signalisation sur les images capturées.

Par exemple, dans le cas d'une détection des éléments de signalisation par appariement de masques, des masques différents sont utilisés pour, d'une part, des caractéristiques photométriques correspondant à un matin ensoleillé et, d'autre part, des caractéristiques photométriques correspondant à un début de soirée nuageuse.

En fonctionnement, la caméra 6 prend des images des véhicules circulant sur la voie de circulation. L'unité de traitement de données 20 détecte sur les images les véhicules 10 circulant sur la voie de circulation 4.

Lorsque l'unité de traitement de données 20 détecte un véhicule 10, elle enregistre une séquence d'images brutes prises par la caméra 6 et sur lesquelles le véhicule 10 apparaît.

L'unité de traitement de données 20 met en oeuvre l'étape de redressement pour redresser les images brutes et obtenir les images redressées par transformation géométrique des images brutes.

L'unité de traitement de données 20 détecte et caractérise des points d'intérêt sur les images redressées et assemble les images redressées en fonction des points d'intérêt, pour former une image reconstituée sur laquelle le véhicule 10 apparait sur toute sa longueur.

L'unité de traitement de données 20 mesure les caractéristiques géométriques du véhicule 20, en particulier la longueur, la largeur et la hauteur, et compte le nombre de roues visibles sur la face latérale 14 visible du véhicule 10.

L'unité de traitement de données 20 attribue une classe au véhicule en fonction des caractéristiques géométriques déterminées.

En option, l'unité de traitement de données 20 enregistre la séquence d'images comme preuve du passage du véhicule, en cas d'éventuelle contestation. L'enregistrement est conservé pendant une durée limitée, pendant laquelle la contestation est possible.

Dans un mode de mise en oeuvre, si l'unité de traitement de données 20 détermine qu'il n'est pas possible de classer automatiquement le véhicule avant un taux de confiance suffisant, elle transmet l'enregistrement de la séquence d'images, par exemple pour un traitement manuel par un opérateur.

La position de la caméra 6 et l'orientation de son axe de prise de vue A par rapport à la voie de circulation à laquelle la caméra 6 est affectée peuvent varier lors de l'installation du système de classification 2.

Un procédé d'installation du système de classification automatique de véhicules automobiles comprend une phase de calibration effectuée une fois le système de classification installé. L'étape de calibration est effectuée avant l'activation du système de classification ou au cours de son utilisation.

La phase de calibration comprend une étape de calibration de mesure pour calibrer les mesures fournies par l'unité de traitement de données 20 en fonction de la position de la caméra 6.

La calibration de mesure comprend la prise d'images d'un véhicule de référence, de dimensions connues, circulant sur la voie de circulation 4, et la calibration des mesures fournies par l'unité de traitement de données 20 en fonction des dimensions connues du véhicule de référence.

En variante ou en option, la calibration de mesure comprend la prise d'images de la voie de circulation en l'absence de véhicule, la mesure d'éléments de la scène prise par la caméra 6, et la calibration des mesures sur une image reconstituée de la scène en fonction de mesures réalisées sur la scène réelle.

La phase de calibration comprend une étape de calibration de transformation géométrique, pour déterminer la transformation géométrique nécessaire pour redresser les images brutes, c'est-à-dire annuler l'effet de perspective.

La calibration de transformation géométrique est réalisée en prenant une image d'un véhicule de référence et en désignant graphiquement, par exemple à l'aide de la souris, quatre points sur le véhicule de référence formant un rectangle dans la scène réelle. L'unité de traitement de données 20 détermine la transformation géométrique en fonction d'éléments parallèles et d'éléments perpendiculaires du véhicule de référence.

En variante ou en option la calibration de transformation géométrique est réalisée en prenant une image de la scène dans le champ de vision de la caméra en l'absence de véhicule et en déterminant la transformation géométrique en fonction d'éléments parallèles et/ou d'éléments perpendiculaires de la scène.

Tel que représenté sur la Figure 2, le système de classification 2 est configuré pour classer les véhicules circulant sur une voie. La caméra est disposée à gauche de la voie (en considérant le sens de déplacement de véhicule sur la voie) ou à droite (en pointillés sur la Figure 2).

Le système de classification 2 de la Figure 7 est configuré pour classer les véhicules circulant sur une route à deux voies sur lesquelles les véhicules circulent dans le même sens.

Le système de classification 2 comprend une caméra 40, 42 respective affectée à chaque voie. La caméra 40 de la voie de droite est disposée à droite de cette voie de droite, tandis que la caméra 42 de la voie de gauche est disposée à gauche de la voie de gauche. Ceci évite qu'une caméra affectée à une voie soit masquée par un véhicule circulant sur l'autre voie.

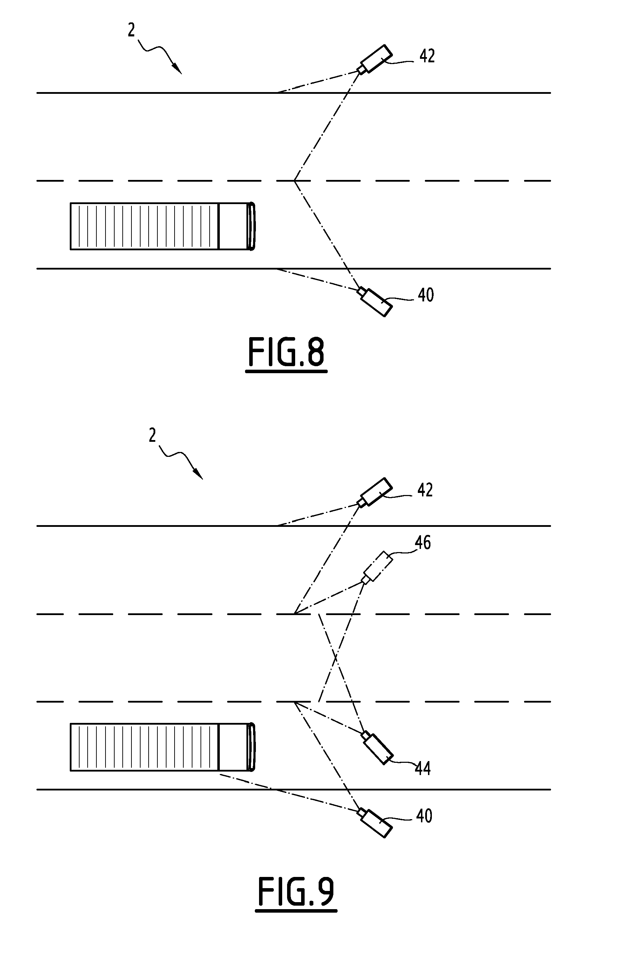

Le système de classification de la Figure 8 est configuré pour classer les véhicules circulant une route à au moins trois voies (ici exactement trois voies) sur lesquelles les véhicules circulent dans le même sens.

Le système de classification comprend au moins une caméra respective affectée à chaque voie. Une caméra 40 affectée à la voie de droite est disposée à droite de cette voie de droite. Une caméra 42 affectée à la voie de gauche est disposée à gauche de la voie de gauche. Une caméra 44 affectée à une voie intermédiaire est disposées sur la droite de la voie intermédiaire (trait pleins) ou sur la gauche de la voie intermédiaire (traits pointillées).

En option, le système de classification 2 comprend deux caméras 44, 46 affectées à une voie intermédiaire, une caméra étant disposée à droite de la voie intermédiaire et l'autre caméra étant disposée à gauche de la voie intermédiaire. L'unité de traitement est programmée pour utiliser les images fournies par l'une ou l'autre des deux caméras affectée à la même voie selon que les images d'une caméra ou de l'autre son exploitables ou non, par exemple du fait d'un masquage de la voie par un véhicule circulant sur une autre voie.

Le système de classification 2 de la Figure 9 diffère de celui de la Figure 8 en ce que une seule caméra est affectée à chaque voie en étant disposées sur la gauche de la voie à laquelle elle est affectée, ou en variante à droite. Cette configuration des caméras implique un risque de masquage pour toutes les voies sauf une.

Grâce à l'invention, le système de classification 2 est simple et économique à mettre en oeuvre. En effet, la classification des véhicules circulant sur une voie est réalisée uniquement par traitement numérique d'images matricielles d'intensité délivrées par la caméra. Les séquences d'images issues de cette même caméra peuvent également être utilisées comme preuve du passage du véhicule classifié. Il n'est pas nécessaire de prévoir des dispositifs annexes tels que des boucles magnétiques, de scanner à laser ou des caméras temps de vol, ou caméra thermique dont l'installation et l'utilisation est coûteuse. Le système de classification 2 peut être installé facilement et rapidement en minimisant l'impact sur la circulation.

Le traitement numérique appliqué aux images brutes capturées par la caméra est simple et permet de classer les véhicules de manière fiable. La phase de calibration permet ensuite une mise en oeuvre fiable. La phase de calibration est simple à réaliser.

## Revendications

1. Système de classification automatique de véhicules automobiles roulant sur une route, comprenant une unité de traitement de données (20) programmée pour classifier un véhicule présent sur des images capturées par une caméra (6), par traitement des images capturées, les images capturées étant des images matricielles d'intensité et la caméra (6) étant disposée pour capturer des images des véhicules en vue plongeante et de trois quart, de préférence de trois quart face.

2. Système de classification selon la revendication 1, dans lequel l'unité de traitement de données (20) est programmée pour calculer une image redressée à partir d'une image brute capturée, de manière à rétablir sur l'image redressée le parallélisme entre les éléments parallèles de la scène réelle et la perpendicularité entre les éléments perpendiculaires de la scène réelle.

3. Système de classification selon la revendication 2, dans lequel le calcul de l'image redressée en réalisé en appliquant une matrice de transformation prédéterminée à l'image capturée.

4. Système de classification selon l'une quelconque des revendications précédentes, dans lequel l'unité de traitement de données (20) est programmée pour calculer une image reconstituée sur laquelle un véhicule est visible sur toute sa longueur, à partir d'une séquence d'images sur lesquelles au moins un tronçon du véhicule apparaît.

5. Système de classification selon la revendication 4, dans lequel l'unité de traitement de données (20) est programmée pour identifier des points caractéristiques du véhicule apparaissant sur plusieurs images de la séquence d'images et combiner les images de la séquence d'images en fonction des points caractéristiques identifiés pour former l'image reconstituée.

6. Système de classification selon la revendication 4 ou 5, dans lequel l'unité de traitement de données (20) est programmée pour calculer la longueur et/ou la hauteur du véhicule à partir de l'image reconstituée.

7. Système de classification selon la revendication 4, 5 ou 6, dans lequel l'unité de traitement de données (20) est programmée pour compter le nombre d'essieux du véhicule en comptant le nombre de roues apparaissant sur une face latérale du véhicule visible à partir de l'image reconstituée..

8. Système de classification selon la revendication 7, dans lequel l'unité de traitement de données (20) est programmée pour détecter une roue au moyen d'un algorithme d'identification d'ellipse.

9. Système de classification selon la revendication 8, dans lequel l'unité de traitement de données (20) est programmée pour compter le nombre d'essieux en fonction de configurations d'essieux prédéterminées.

10. Système de classification selon l'une quelconque des revendications précédentes, dans lequel l'unité de traitement de données (20) est programmée pour détecter l'entrée d'un nouveau véhicule dans le champ de la caméra (6) par détection d'une plaque d'immatriculation sur les images capturées.

11. Système de classification selon l'une quelconque des revendications précédentes, dans lequel l'unité de traitement de données est programmée pour détecter la séparation entre un véhicule et le véhicule suivant en fonction de la route et/ou de la signalisation.

12. Système de classification selon l'une quelconque des revendications précédentes, dans lequel l'unité de traitement de données (20) est programmée pour détecter la séparation entre un véhicule et le véhicule suivant en fonction des caractéristiques photométriques de la route et/ou de la signalisation.

13. Système de classification selon l'une quelconque des revendications précédentes, dans lequel l'unité de traitement de données (20) est programmée pour implémenter un apprentissage, de préférence continu, des caractéristiques photométriques de la route et/ou de la signalisation.

14. Procédé de classification automatique de véhicules automobiles roulant sur une route, comprenant la classification d'un véhicule présent sur des images capturées par une caméra (6), par traitement des images capturées par une unité de traitement de données (20), les images capturées étant des images matricielles d'intensité et la caméra (6) étant disposée pour capturer des images des véhicules en vue plongeante et de trois quart, de préférence de trois quart face.

15. Produit programme d'ordinateur programmé pour mettre en oeuvre le procédé de la revendication 14, lorsqu'il est exécuté par une unité de traitement de données.
